# EUROPEAN PATENT APPLICATION

(11) **EP 1 742 400 A1**
(43) Date of publication of application: **10.01.2007**
(21) Application number: 05734693.4
(22) Date of filing: 22.04.2005
(51) Int. Cl.: H04J 11/00, H04B 1/707

(54) **MULTICARRIER TRANSMITTER APPARATUS, MULTICARRIER RECEIVER APPARATUS, MULTICARRIER TRANSMITTING METHOD, AND MULTICARRIER RECEIVING METHOD**

(30) Priority: 06.05.2004 JP 2004137761
(71) Applicant: MATSUSHITA ELECTRIC INDUSTRIAL CO., LTD., Osaka 571-8501 (JP)
(72) Inventor: HASHIMOTO, Kazunari., c/o Matsushita El.Ind.Co.Ltd, Osaka-shi, Osaka 540-6319 (JP); TAKAKUSAKI, Keiji., c/o Matsushita El.Ind.Co.Ltd, Osaka-shi, Osaka 540-6319 (JP)
(74) Representative: Grünecker, Kinkeldey, Stockmair & Schwanhäusser Anwaltssozietät
(86) International application number: PCT/JP2005/007711
(87) International publication number: WO 2005/109709

(57) **Abstract**

A multicarrier transmitter apparatus capable of improving information transmission efficiency regardless of the attenuation characteristic of a bandpass filter used. In this apparatus, BPFs (124, 126) limit the bands of transmitted data. A padding position calculating part (102) decides, based on the attenuation characteristics of the BPFs (124,126), an insertion position at which to insert padding bits in the transmitted data. A padding part (103) inserts the padding bits at the insertion position decided by the padding position calculating part (102).

## Description

### Technical Field

The present invention relates to a multicarrier transmission apparatus, multicarrier reception apparatus, multicarrier transmission method and multicarrier reception method used in a wireless communication system adopting the MC-CDMA (Multi Carrier-Code Division Multiple Access) scheme.

### Background Art

Studies have hitherto been carried out on a wireless communication scheme that is able to realize a transmission data rate almost comparable to wired communication (for example, 100 Mbps). In particular, the MC-CDMA scheme has been focused on, which combines the OFDM (Orthogonal Frequency Division Multiplexing) scheme and CDMA (Code Division Multiple Access) scheme so as to support a cellular system including a wireless communication system for a mobile telephone and a hotspot (remote cell) including wireless LAN (Local Area Network).

A conventional multicarrier transmission apparatus based on the MC-CDMA scheme will be outlined below.

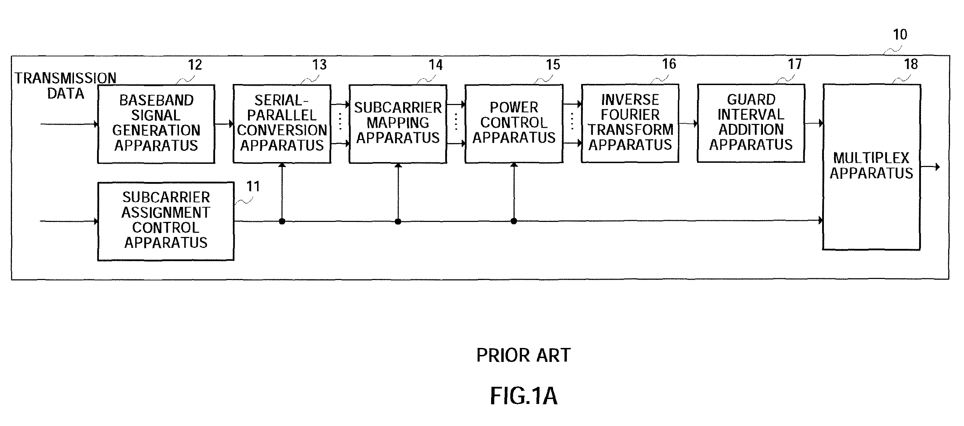

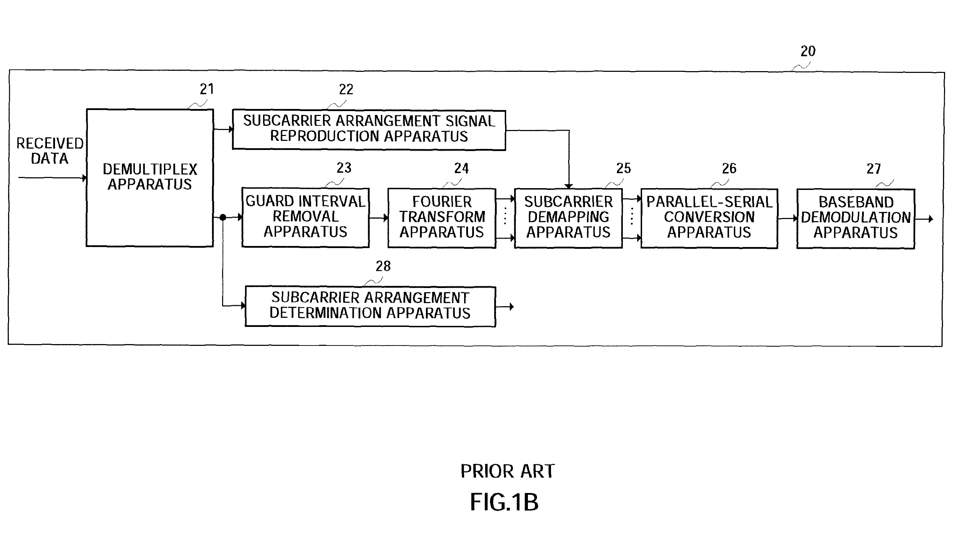

FIG.1A is a block diagram showing an example of a configuration of a conventional multicarrier transmission apparatus, and FIG.1B is a block diagram showing an example of a configuration of a multicarrier reception apparatus that performs radio communication with the multicarrier transmission apparatus. In this multicarrier transmission apparatus 10, amongaplurality of subcarriers (for example, A subcarriers), B subcarriers (where B is an integer equal to or greater than 1 and equal to or smaller than A) that fulfill required channel quality are used (for example, see patent document 1), based on control information from subcarrier assignment control apparatus 11. Subcarrier assignment control apparatus 11 generates control information regarding subcarrier assignment, based on feedback information regarding the subcarriers selected as a result of channel quality measurement in subcarrier arrangement determination apparatus 28 of multicarrier reception apparatus 20.

With respect to transmission power of multicarrier transmission apparatus 10, the transmission power for subcarriers that are not used is assigned to the subcarriers to be used. Inverse Fourier transform apparatus 16 then performs OFDM modulation on transmission data, and guard interval (GI) addition apparatus 17 inserts a GI to the OFDM modulated signal. Multiplex apparatus 18 then multiplexes a control signal on the OFDM modulated signal and transmits this multiplexed signal to multicarrier reception apparatus 20.

Meanwhile, multicarrier reception apparatus 20 demultiplexes control information and the OFDM modulated signal in demultiplex apparatus 21. Then, guard interval removal apparatus 23 removes the GI from the OFDMmodulated signal, and Fourier transform apparatus 24 performs OFDM demodulation. Subcarrier demapping apparatus 25 determines effective subcarriers based on information from subcarrier arrangement signal reproduction apparatus 22, thereby obtaining the received signal. In this way, by performing radio communication using only the subcarriers that fulfill a required channel quality, information transmission efficiency is improved.

Further, for example, patent document 2 discloses a multicarrier transmission apparatus that assigns each symbol to C subcarriers by spreading transmission data to the frequency axis direction at spreading factor C. This multicarrier transmission apparatus assigns transmission power for D subcarriers having poor reception quality among C subcarriers assigned one symbol, to the remaining (C-D) subcarriers. In this way, all the subcarriers for one symbol avoids from being stopped all at once. The number of transmission bits is maintained, and information is transmitted efficiently.
Patent-Document 1: Japanese Patent Application Laid-Open No.2003-158500
Patent-Document 2: Japanese Patent Application Laid-Open No.2003-32218

### Disclosure of Invention

### Problems to be Solved by Invention

However, with the above-mentioned conventional multicarrier transmission apparatus, a bandpass filter (BPF) is generally required to minimize power leakage to neighboring channels when radio transmission processing is performed. Nevertheless, filter characteristics of the bandpass filter, particularly, attenuation characteristics are not taken into consideration. In order to realize efficient information transmission, it is important to take filter characteristics into consideration. Nevertheless, studies on multicarrier transmission taking filter characteristics into consideration have not made much progress.

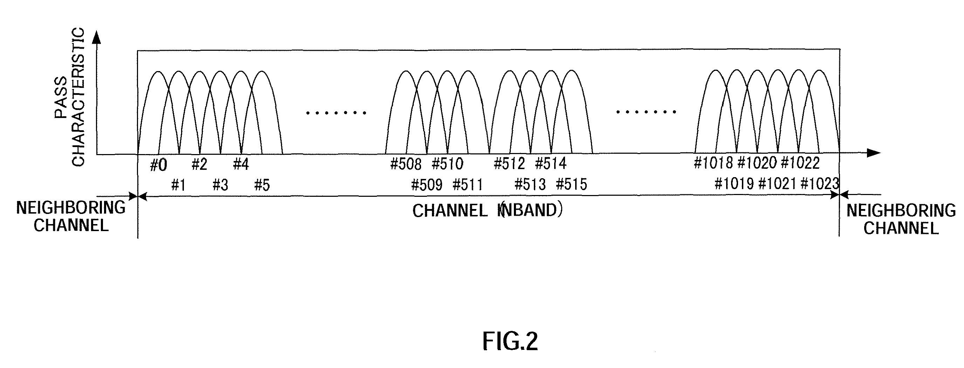

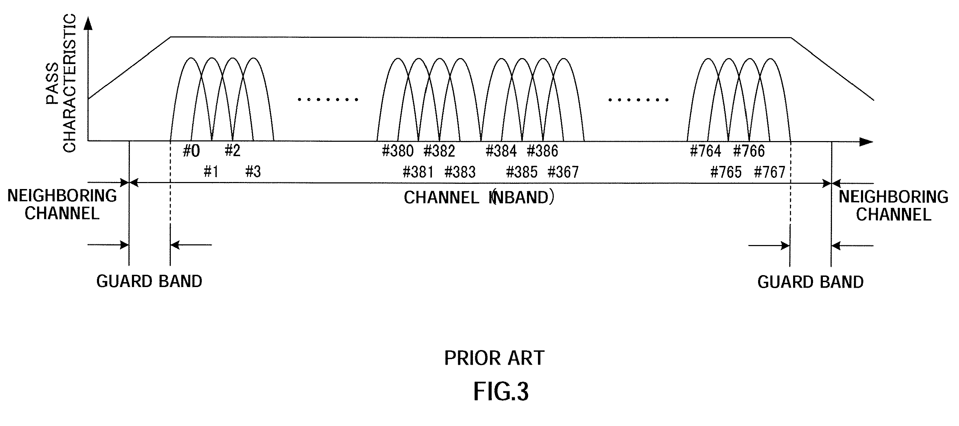

Here, a relationship between subcarrier arrangement and filter characteristics will be described. FIG.2 is a view showing an ideal subcarrier arrangement and filter characteristics. A method for maximizing frequency use efficiency and transmission efficiency is to arrange subcarriers up to the boundaries with neighboring channels and perform band limitation using a BPF having filter characteristics including ideal attenuation characteristics. However, it is very difficult to realize a BPF having the filter characteristics, as shown in FIG.2, and, it is necessary to consider realistic filter characteristics. For example, the frequency use method as shown in FIG.3 is possible. That is, the number of subcarriers is reduced, guard bands are arranged in the channel boundaries, and band limitation is performed within the guard bands to minimize interference against the neighboring channels. However, with this method, frequency use efficiency is limited, and there is therefore a certain limitation in making information transmission more efficient.

Further, if even filter characteristics having relatively steep attenuation characteristics as shown in FIG.3 cannot be obtained, in order to prevent increase in power leakage to neighboring channels, an interval between the cutoff frequency of the high frequency side and the cutoff frequency of the low frequency side has to be narrowed. In this case, CNRs (Carrier to Noise Ratio) of the subcarriers at both ends of a band for use are low, and, as a result, reception error rate may increase. Consequently, in this case also, efficient information transmission is not necessarily realized.

It is therefore an object of the present invention to provide a multicarrier transmission apparatus, multicarrier reception apparatus, multicarrier transmission method, and multicarrier reception method whereby information transmission efficiency can be improved regardless of attenuation characteristics of a bandpass filter for use.

### Problems to be Solved by the Invention

A multicarrier transmission apparatus in the present invention for transmitting transmission data using a plurality of subcarriers employs a configuration having: a limitation section that limits a band of the transmission data; a determination section that determines an insert position of a padding bit to be inserted in the transmission data based on attenuation characteristics of the limitation section; and an insert section that inserts the padding bit in the determined insert position.

A multicarrier reception apparatus of the present invention employs a configuration having: a reception section that receives data, the data being transmitted using a plurality of subcarriers from a multicarrier transmission apparatus having a limitation section limiting a band of data to be transmitted and being inserted a padding bit in an insert position determined based on attenuation characteristics of the limitation section; a specification section that specifies the insert position; and a depadding section that removes the padding bit inserted in the specified insert position from the received data.

A multicarrier transmission method of the present invention for transmitting transmission data using a plurality of subcarriers in a multicarrier transmission apparatus having a limitation section limiting a band of the transmission data, the method having: a determination step of determining an insert position of a padding bit to be inserted in the transmission data based on attenuation characteristics of the limitation section; and an insertion step of inserting the padding bit in the determined insert position.

A multicarrier reception method in the present invention having: a reception step of receiving data, the data being transmitted using a plurality of subcarriers from a multicarrier transmission apparatus having a limitation section limiting a band of data to be transmitted and being inserted a padding bit in an insert position determined based on attenuation characteristics of the limitation section; an specification step of specifying the insert position; and a depadding step of removing the padding bit inserted in the specified insert position from the received data.

### Advantageous Effect of the Invention

According to the present invention, it is possible to improve information transmission efficiency regardless of attenuation characteristics of a bandpass filter for use.

### Brief Description of Drawings

FIG.1A is a block diagram showing an example of a configuration of a conventional multicarrier transmission apparatus;
FIG.1B is a block diagram showing an example of a configuration of a conventional multicarrier reception apparatus;
FIG.2 is a view for explaining an ideal subcarrier arrangement and filter characteristics;
FIG. 3 is a view for explaining a conventional example of a subcarrier arrangement and filter characteristics;

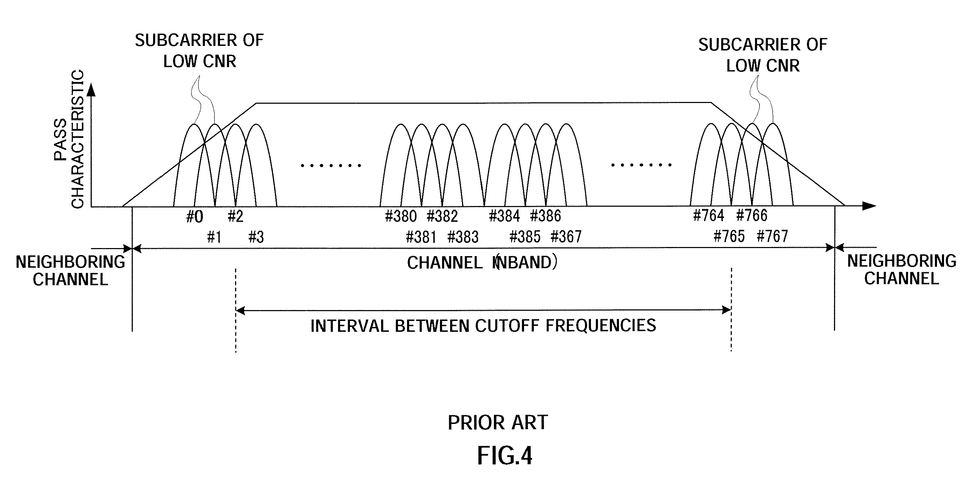

FIG.4 is another view for explaining a conventional example of a subcarrier arrangement and filter characteristics;
FIG.5 is a block diagram showing a configuration of a multicarrier transmission apparatus according to an embodiment of the present invention;
FIG.6 is a block diagram showing a configuration of a radio transmission section in a multicarrier transmission apparatus of this embodiment;
FIG.7 is a block diagram showing a configuration of a transmission control section in a multicarrier transmission apparatus of this embodiment;
FIG.8 is a view showing a format of data to be processed by a multicarrier transmission apparatus of this embodiment;
FIG.9 is a block diagram showing a configuration of a multicarrier reception apparatus of this embodiment;
FIG.10 is a block diagram showing a configuration of a radio reception section in a multicarrier reception apparatus of this embodiment;
FIG.11 is a view showing an operation example of a multicarrier transmission apparatus of this embodiment;
FIG.12 is a view of a list of the number of padding bits calculated in a number-of-bits calculation section in a multicarrier transmission apparatus of this embodiment; and
FIG.13 is a view for explaining another operation example of a multicarrier transmission apparatus of this embodiment.

### Best Mode for Carrying Out the Invention

An embodiment of the present invention will be described in detail below with reference to the accompanying drawings.

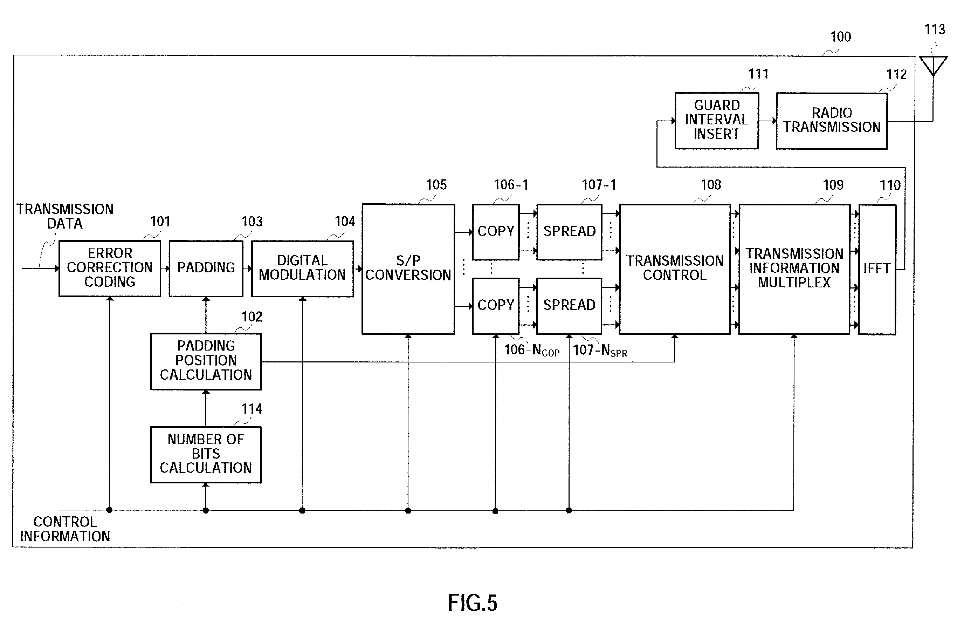

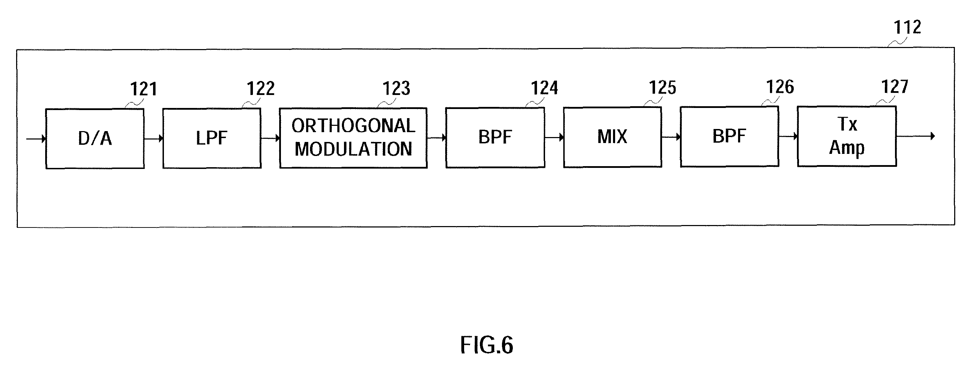

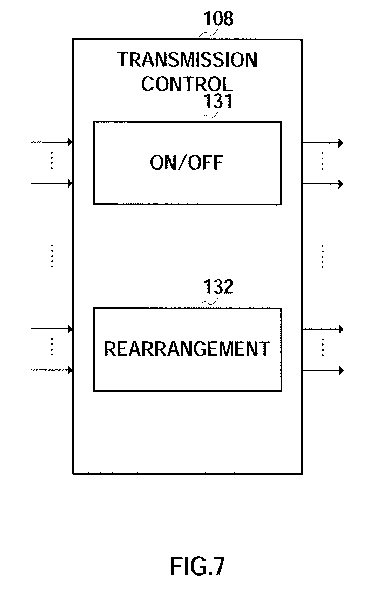

FIG.5 is a block diagram showing a configuration of a multicarrier transmission apparatus of the MC-CDMA scheme according to an embodiment of the present invention. Multicarrier transmission apparatus 100 of FIG.5 has: error correction coding section 101; padding position calculation section 102; padding section 103; digital modulation section 104; serial-parallel (S/P) conversion section 105; copy sections 106-1, ..., 106-N_{COP}; spreading sections 107-1, ..., 107-N_{SPR} (N_{SPR} = N_{COP}); transmission control section 108; control information multiplex section 109; IFFT (Inverse Fast Fourier Transform) section 110; GI insert section 111; radio transmission section 112; antenna 113; and number-of-bits calculation section 114. Further, as shown in FIG.6, radio transmission section 112 has: D/A (digital-analog conversion) section 121; lowpass filter (LPF) 122; orthogonal modulation section 123; BPF 124; MIX section 125; BPF 126; and TxAmp section 127. Also, as shown in FIG.7, transmission control section 108 has ON/OFF section 131 and rearrangement section 132. Copy sections 106-1 to 106-N_{COP} will simplybe referred to as "copy section 106, " and spreading sections 107- 1 to 107-N_{SPR} (N_{SPR}=N_{COP}) will simply be referred to as "spreading section 107" when mentioned in the description below.

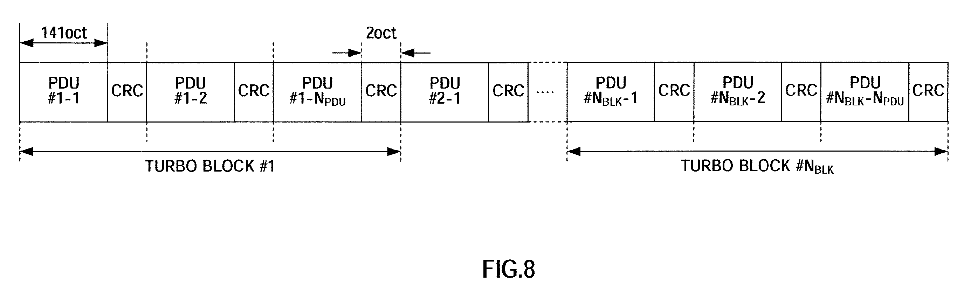

Error correction coding section 101 performs error correction coding (for example, turbo coding) on data to be transmitted according to coding rate information included in control information. Here, control information includes information necessary for processing which is performed on data, for example, a coding rate and spreading factor adaptively set for data, information designating a modulation scheme and pilot signal. Further, data inputted to error correction coding section 101 has, for example, the format shown in FIG.8. In the format shown in FIG.8, the number of turbo blocks included in one code of transmission data is N_{BLK}, and the number of PDUs (Protocol Data Unit) included in the turbo blocks is N_{PDU}. Also, 1 PDU is comprised of 141 octets of information, and a CRC (Cyclic Redundancy Check) added to each PDU is comprised of 2 octets of information.

Number-of-bits calculation section 114 calculates the number of padding bits to be inserted in data per packet, based on coding rate information, spreading factor information and modulation scheme information included in control information. Here, a padding bit is information for filling the shortage when data amount does not satisfy the band used by multicarrier transmission apparatus 100.

Padding position calculation section 102 as a determination means obtains information regarding the filter characteristics of BPFs 124 and 126 in advance as limitation means that are used for radio transmission processing in radio transmission section 112 of multicarrier transmission apparatus 100. Further, padding position calculation section 102 takes the filter characteristics into consideration and calculates the position in data where padding bits, of which the number of bits is calculated at number-of-bits calculation section 114, need to be inserted--that is, the insert position of padding bits. The insert position is preferably calculated so that the padding bits are arranged in a subcarrier in at least one end in the band for use among a plurality of subcarriers. Padding position calculation section 102 outputs a instruction for padding bit insertion in the calculated insert position to padding section 103. Padding position calculation section 102 and a communicating party, preferably, share information regarding the insert position that is uniquely determined from the number of padding bits. Also, information regarding the calculated insert position is preferably reported to transmission control section 108.

Padding section 103 as an insert means inserts the padding bits to data from error correction coding section 101 in accordance with the instruction from padding position calculation section 102. Digital modulation section 104 modulates data from padding section 103 according to the modulation scheme information included in control information.

A combination of S/P conversion section 105, copy section 106 and spreading section 107 forms an assignment section that assigns data subjected to digital modulation to a plurality of subcarriers in the band used by multicarrier transmission apparatus 100. In the assignment section, S/P conversion section 105 performs serial-parallel conversion on data received from digital modulation section 104 in accordance with spreading factor information included in the control information. Copy section 106 performs data distribution by duplicating data received from S/P conversion section 105 in accordance with the spreading factor information included in the control information. Spreading section 107 spreads data from copy section 106 to the frequency axis direction according to the spreading factor information included in the control information. The assignment section may further include transmission control section 108.

Transmission control section 108 performs the transmission control (later described) on data received from spreading section 107. Transmission section 108, preferably, refers to information regarding the insert position reported from padding position calculation section 102 when performing transmission control. In transmission control section 108, ON/OFF section 131 performs ON/OFF control per subcarrier, and rearrangement section 132 rearranges spreading chips. ON/OFF control per subcarrier and rearrangement of spreading chips will be described in detail later.

Control information multiplex section 109 multiplexes data from transmission control section 108 by control information. IFFT section 110 performs OFDM modulation on data received from control information multiplex section 109 by performing IFFT. GI insert section 111 inserts a GI in a predetermined position in data received from IFFT section 110.

Radio transmission section 112 performs radio transmission processing on data received from GI insert section 111. Data subjected to radio transmission processing is transmitted via antenna 113.

In radio transmission section 112, D/A section 121 performs digital-analog conversion on data from GI insert section 111. LPF 122 limits the band of data from D/A section 121. Orthogonal modulation section 123 converts data from LPF 122 from a baseband signal to an intermediate frequency signal. BPF 124 has unique attenuation characteristics in accordance with the band used by multicarrier transmission apparatus 100, and limits the band of data from orthogonal modulation section 123. MIX section 125 performs orthogonal modulation on data from BPF 124, and converts the data from an intermediate frequency signal to a high frequency signal. BPF 126 has unique attenuation characteristics in accordance with the band used by multicarrier transmission apparatus 100, and limits the band of data from MIX section 125. TxAmp section 127 amplifies data from BPF 126. In this way, a transmission signal per packet is generated, and the generated transmission signal is transmitted from antenna 113.

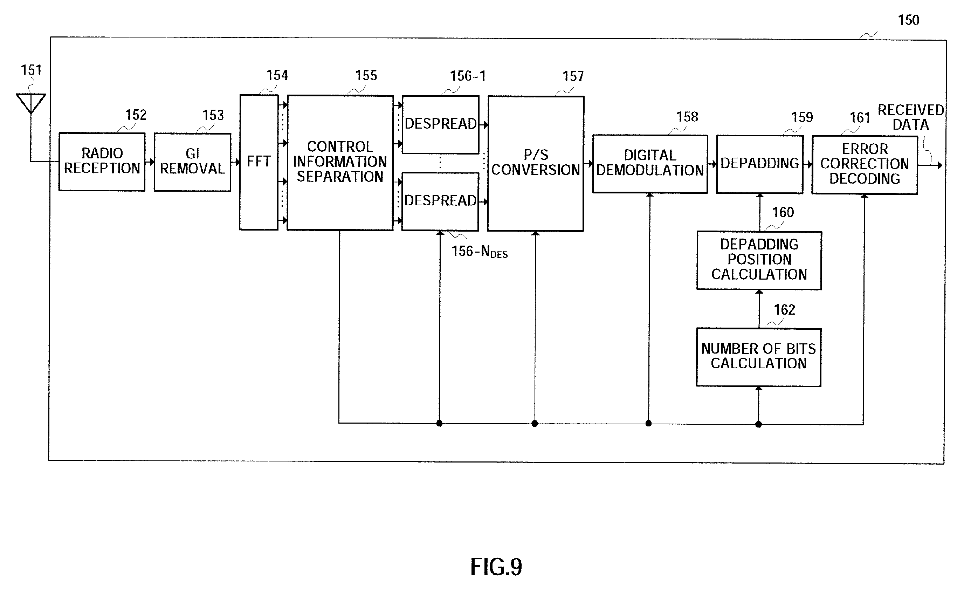

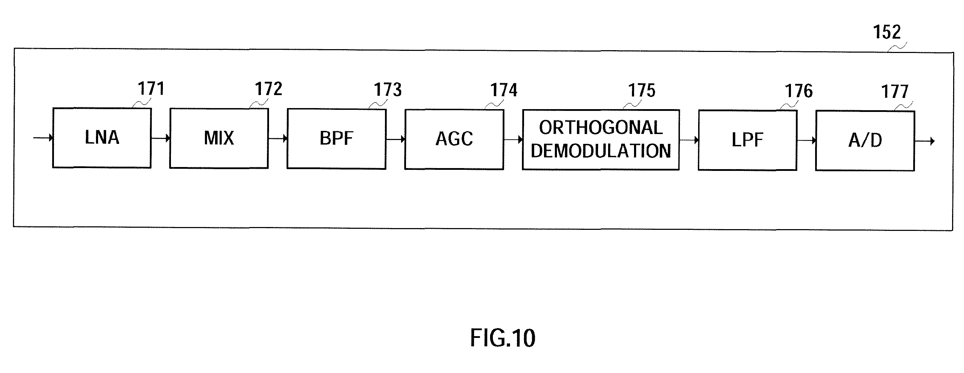

FIG.9 is a block diagram showing a configuration of a multicarrier reception apparatus that performs radio communication with multicarrier transmission apparatus 100 of this embodiment. Multicarrier reception apparatus 150 of FIG. 9 has: antenna 151; radio reception section 152; GI removal section 153; FFT section 154; control information demultiplex section 155; despreading section 156-1,..., 156-N_{DES}, parallel-serial (P/S) conversion section 157; digital demodulation section 158, depadding section 159; depadding position calculation section 160; error correction decoding section 161; and number-of-bits calculation section 162. Further, as shown in FIG.10, radio reception section 152 has: LNA (Low Noise Amplifier) 171; MIX section 172; BPF 173; AGC (Automatic Gain Controller) 174; orthogonal demodulation section 175, LPF 176; and A/D (analog-digital conversion) section 177. Despreading section 156-1 to 156-N_{DES} will simply be referred to as "despreading section 156" when mentioned in the description below.

Radio reception section 152 performs radio reception processing on data received via antenna 151. In radio reception section 152, LNA 171 amplifies data received at antenna 151. MIX section 172 converts data from LNA 171 from a high frequency signal to an intermediate frequency signal. BPF 173 has unique filter characteristics, and limits the band of data from MIX section 172. AGC 174 adjusts a gain of data from BPF 173. Orthogonal demodulation section 175 performs orthogonal modulation on data from AGC 174, and converts the data from an intermediate frequency signal to a baseband signal. LPF 176 limits the band of data from orthogonal demodulation section 175. A/D section 177 performs analog-digital conversion on data from LPF 176.

GI removal section 153 removes the GI inserted in the predetermined position of data from A/D section 177. FFT section 154 performs OFDM demodulation on data from GI removal section 153 by performing FFT. Control information demultiplex section 155 demultiplexes the multiplexed control information from data from FFT section 154. Despreading section 156 despreads data from control information demultiplex section 155 according to the spreading factor information included in the demultiplexed control information. P/S conversion section 157 performs parallel-serial conversion on data from despreading section 156 in accordance with the spreading factor information included in the demultiplexed control information. Digital demodulation section 158 performs digital demodulation according to the modulation scheme information included in the demultiplexed control information.

Number-of-bits calculation section 162 calculates the number of padding bits inserted in the received data based on the modulation scheme information, spreading factor information, and coding rate information included in the demultiplexed control information.

Depadding position calculation section 160 as an specifying means obtains in advance information regarding the insert position which is uniquely determined by padding position calculation section 102 in accordance with the number of padding bits. That is, padding position calculation section 102 and depadding position calculation section 160 share the insert position information. In this way, it is possible to receive data, in which the insert position of padding bits is determined such that padding bits are arranged in a subcarrier in at least one end of the band for use, among a plurality of subcarriers, without receiving information regarding the number of insert bits of the padding bits and the insert position from multicarrier transmission apparatus 100, so that there is no need for radio transmission of the control information.

Also, depadding position calculation section 160 specified the insert position of the padding bits inserted in the data. That is, depadding position calculation section 160 receives a report of the number of padding bits from number-of-bits calculation section 162 and also calculates the removal position of padding bits by referring to the insert position information. Further, an instruction for removal of the padding bits from the calculated removal position is outputted to depadding section 159.

Depadding section 159 removes the padding bits from data from digital demodulation section 158 according to the instruction from depadding position calculation section 160. Error correction decoding section 161 performs error correction decoding on data from depadding section 159 according to the coding rate information included in the demultiplexed control information.

Next, the operations of multicarrier transmission apparatus 100 having the above-mentioned configuration will be described with two examples.

For easy understanding of the two operation descriptions, the conditions below will be assumed. First, turbo coding is adopted as an error correction coding scheme, and the turbo coding is pursuant to the 3GPP (3rd Generation Partnership projects) standard. That is, the maximum block size is 5114 bits, and 12 bits of tail bits are added to data after coding. If data of size over 5114 bits is coded, the data is equally divided so that each divided data is equal to or smaller than 5114 bits. Since 1 PDU = 141 octets = 1128 bits and 16 bits of a CRC is added per PDU, transmission bits before coding are a multiple of 1144 (= 1128+16) and the maximum block size in turbo coding is 5114 bits. Consequently, N_{PDU} is equal to or smaller than 4.

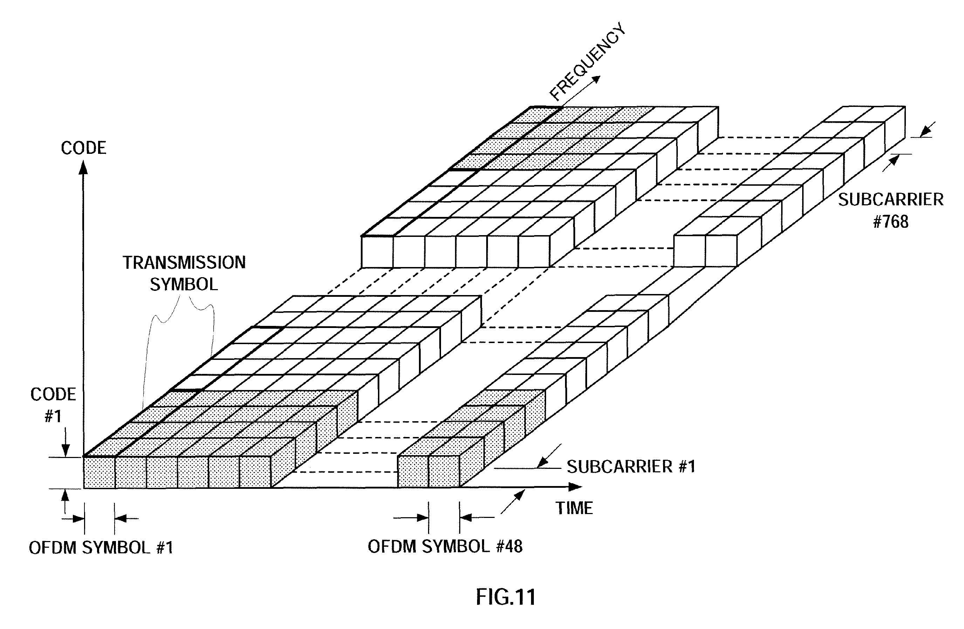

Also, assume that, as shown in FIG.11, the number of OFDM symbols N_{OFDM} per packet is 48, the number of subcarriers N_{SUB} within a band for use is 768, and the number of code multiplexes N_{CODE} is 1, spreading is performed to the frequency axis direction only, the spreading factor is 4, QPSK (Quadrature Phase Shift Keying) is set as a digital modulation scheme and a coding rate R at error correction coding is 1/2. Also, since N_{OFDM} = 48 and N_{SUB} = 768, the maximum number of transmission chips in data per packet is 36864 (= 48 × 768). Further, since SF = 4, the maximum number of transmission symbols is 9216 (= 36864/4). Moreover, the digital modulation scheme is QPSK--that is, 2 bits per transmission symbol--and the maximum number of transmission bits after padding bit insertion is 18432 (= 9216 × 2).

Furthermore, assume that the number of turbo blocks N_{BLK} of inputted data is 2, and the number of PDUs N_{PDU} within each turbo block is 4.

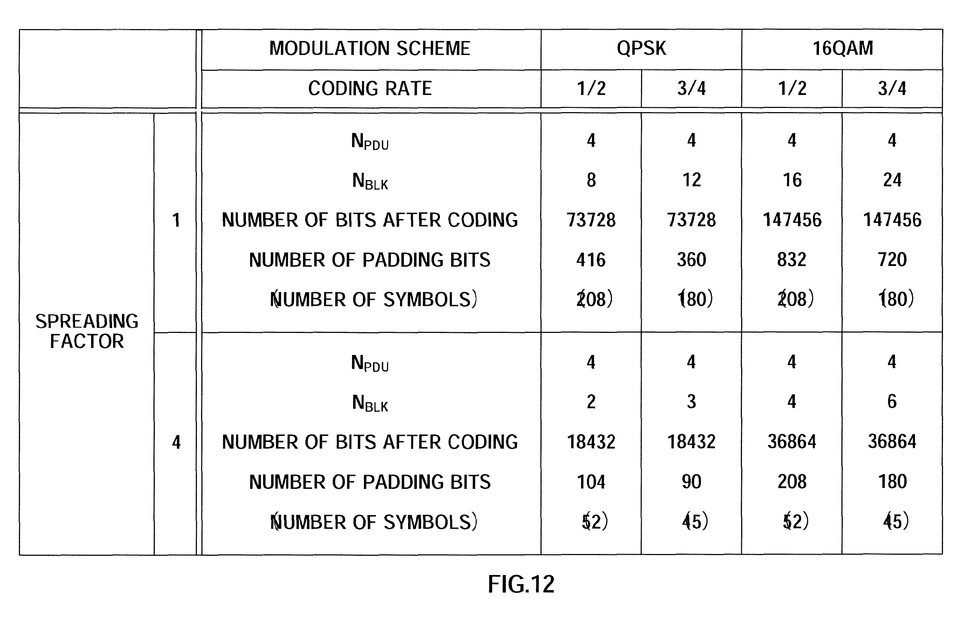

Multicarrier transmission apparatus 100 is able to operate on the precondition except for the above -described case, with respect to a modulation scheme, coding rate, and spreading factor. The number of padding bits per code is calculated in accordance with various combinations of modulation schemes, coding rates, and spreading factors. FIG.12 is a view showing a list of the number of padding bits per code calculated in number-of-bits calculation section 114 if a modulation scheme of QPSK or 16QAM (Quadrature Amplitude Modulation), a coding rate of 1/2 or 3/4, and a spreading factor of 1 or 4 are considered.

The first operation example will be described below. Data of N_{PDU} = 4 and N_{BLK} = 2 are inputted to error correction coding section 101. Since R = 1/2, the total number of transmission bits of data outputted from error correction coding section 101 is (1144 × N_{PDU} × 1/R + 12) × N_{BLK} = 18328 bits. Accordingly, the number of padding bits calculated in number-of-bits calculation section 114 is the difference between the maximum number of transmission bits (18432 bits) and the total number of transmission bits (18328 bits), that is, 104 bits. These 104 bits of padding bits are added to transmission data. The padding bits of 104 bits are equivalent to 52 transmission symbols if QPSK modulation is performed.

The number of padding bits is found in this way, and then insert position of the padding bit is determined at padding position calculation section 102. In this embodiment, N_{OFDM} = 48. Accordingly, in this embodiment, the padding bits (104 bits: 52 transmission symbols) are divided to the first group comprised of 96 bits (48 transmission symbols) and the second group comprised of 8 bits (4 transmission symbols), and processed. Then, insert positions of the padding bits are determined so that the padding bits of 48 transmission symbols that belong to the first group are arranged in subcarriers at one end (that is, subcarriers #1 to #4) within the band for use. Further, insert positions of the padding bits are determined so that the padding bits of 4 transmission symbols that belong to the second group are arranged in subcarriers at the other end (that is, subcarriers #765 to #768) within the band for use. Moreover, preferably, insert positions of the padding bits are determined so that four transmission symbols that belong to the second group are arranged in OFDM symbols #1 to #4 on the data head side among the OFDM symbols #1 to #48, respectively. However, if the number of transmission symbols that belong to one group is smaller than the number of OFDM symbols, the arrangement of transmission symbols is not limited to the above-mentioned arrangement.

Then, the instruction showing the insert positions of the padding bits is inputted from padding position calculation section 102 to padding section 103. Padding section 103 inserts the padding bits in data in accordance with the instruction. With this embodiment, with respect to data that constitutes OFDM symbols #1 to #4 on the head side, first, a padding bit of two bits (one transmission symbol) is inserted, and then, with error correction coding data of 380 bits (190 transmission symbols) sandwiched in between, another padding bit of two bits (one transmission symbol) is inserted. Also, with respect to OFDM symbols #5 to #48, first, 2 bits of padding bits (one transmission symbol) are inserted, and then 382 bits (191 transmission symbols) of error correction coding data is arranged.

Digital modulation section 104 then performs QPSK modulation. In one OFDM symbol after QPSK modulation, 192 transmission symbols (384 bits) exist. S/P conversion section 105 then performs serial-parallel conversion. In this embodiment, the spreading factor SF is 4. Accordingly, successive 192 transmission symbols of the data subjected to QPSK modulation are thus subjected to serial-parallel conversion sequentially from the head. The transmission symbols of the data subjected to serial-parallel conversion are duplicated into four. The duplicated transmission symbols are spread to the frequency axis direction at spreading section 107. In this way, data is assigned to subcarriers #1 to #768.

By performing the above-described series of processing, it is possible to arrange the padding bits to subcarriers #1 to #4 in at least the one end side among all the OFDM symbols of #1 to #48, and arrange the padding bits to subcarrier #1 to #4 and subcarriers #765 to #768 in the both end sides, regarding OFDM symbols #1 to #4.

ON/OFF section 131 of transmission control section 108 performs transmission control per subcarrier. In this example, the signals of subcarriers #1 to #4 are comprised of the padding bits only, and, therefore, transmission of subcarriers #1 to #4 is "OFF. " This means transmission amplitude is zero. By this means, it is possible to prevent wasting transmission power.

Next, the second operation example will be described. Although the same processing as in the above first operation example is performed in the second operation example, as a difference from the first operation example, rearrangement section 132 of transmission control section 108 performs a rearrangement of spreading chips after the assignment section performs dataassignment. If the spreading factor in the frequency axis direction SF is equal to or greater than 4, rearrangement section 132 divides the spreading chips forming the padding bits equally into two, and rearranges the results so that the results are mapped on the subcarriers at the both end sides.

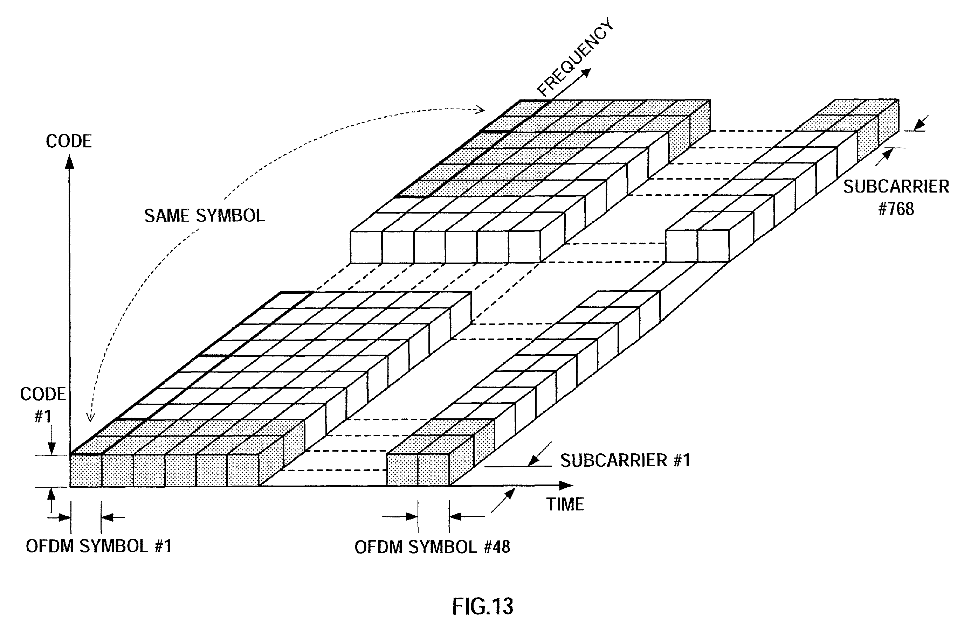

According to the data assignment described in the first operation example, regarding OFDM symbols #5 to #48, the padding bits are not arranged in the subcarriers at one end of a band for use (that is, subcarrier #768). Therefore, as shown in FIG. 13, rearrangement section 132 divides the signal of the spread four chips (that is, transmission symbol #1 assigned to subcarriers #1 to #4) in two equal chips, assigns chips #1 to #2 to subcarrier #1 to #2, and assigns chips #3 to #4 to subcarriers #767 to #768. If a signal of the subcarriers at one end side is not comprised of only the padding bits due to the number of calculated insert bits, there may be an influence due to deterioration in CNR characteristics of the subcarriers. However, by rearranging the spreading chips, it is possible to avoid the influence of possible deterioration in CNR characteristics caused by the calculated number of insert bits.

In this way, according to this embodiment, the insert positions of the padding bits in transmission data of one packet are determined so that the padding bits are arranged in subcarriers #1 to #4 in at least one end in the band for use when the assignment of transmission data is performed. This means even if variations are included in filter characteristics of BPF 124 and BPF 126, multicarrier transmission is performed in consideration of those variations, so that it is possible to improve information transmission efficiency regardless of filter characteristics. Also, it is not necessary to improve required performance for BPF 124 and BPF126 for use, so that manufacturing cost can be reduced.

Also, according to this embodiment, it is possible to receive transmission data, in which the insert position of padding bits is determined such that the padding bits are arranged in subcarriers #1 to #4 in at least one end, without reporting information regarding the number of insert bits and insert positions from multicarrier transmission apparatus 100, so that there is no need for radio transmission of the information, and efficient information communication without requiring extra wireless resources and transmission power is available.

Although spreading in the frequency axis direction has been performed in this embodiment, the spreading method is not limited to this. The present invention is applicable to a multicarrier transmission apparatus in which spreading in the time axis direction is performed, and is also applicable to a multicarrier transmission apparatus in which two dimensional spreading in the frequency axis direction and the time axis direction is performed.

The present application is based on Japanese Patent Application No . 2 004-1377 61, filed on May 6, 2004, the entire content of which is expressly incorporated by reference herein.

### Industrial Applicability

The multicarrier transmission apparatus, multicarrier reception apparatus, multicarrier transmission method and multicarrier reception method of the present invention are useful in a radio communication system employing the MC-CDMA scheme.

## Claims

1. A multicarrier transmission apparatus for transmitting transmission data using a plurality of subcarriers, the multicarrier transmission apparatus comprising:
a limitation section that limits a band of the transmission data;
a determination section that determines an insert position of a padding bit to be inserted in the transmission data based on attenuation characteristics of the limitation section; and
an insert section that inserts the padding bit in the determined insert position.

2. The multicarrier transmission apparatus according to claim 1, further comprising an assignment section that assigns the transmission data in which the padding bit is inserted, to the plurality of subcarriers,
wherein the determination section determines the insert position of the padding bit so that the padding bit inserted in the transmission data is arranged to a subcarrier at an end of a band of the plurality of subcarriers when assignment of the transmission data is performed.

3. The multicarrier transmission apparatus according to claim 2, further comprising:
a spreading section that generates a spreading chip by spreading the transmission data in which the padding bit is inserted; and
a rearrangement section that rearranges the spreading chip that forms the padding bit among the generated spreading chips to subcarriers at both ends of the band of the plurality of subcarriers.

4. The multicarrier transmission apparatus according to claim 1, further comprising a control section that, when one of the plurality of subcarriers is assigned the padding bit alone, controls transmission of the transmission data so that transmission of the one of the plurality of subcarriers is not performed.

5. A multicarrier reception apparatus comprising;
a reception section that receives data, the data being transmitted using a plurality of subcarriers from a multicarrier transmission apparatus having a limitation section limiting a band of data to be transmitted and being inserted a padding bit in an insert position determined based on attenuation characteristics of the limitation section:
a specification section that specifies the insert position; and
a depadding section that removes the padding bit inserted in the specified insert position from the received data.

6. A multicarrier transmission method for transmitting transmission data using a plurality of subcarriers in a multicarrier transmission apparatus having a limitation section limiting a band of the transmission data, the method comprising:
a determination step of determining an insert position of a padding bit to be inserted in the transmission data based on attenuation characteristics of the limitation section; and
an insertion step of inserting the padding bit in the determined insert position.

7. A multicarrier reception method comprising:
a reception step of receiving data, the data being transmitted using a plurality of subcarriers from a multicarrier transmission apparatus having a limitation section limiting a band of data to be transmitted and being inserted a padding bit in an insert position determined based on attenuation characteristics of the limitation section;
a specification step of specifying the insert position; and
a depadding step of removing the padding bit inserted in the specified insert position from the received data.
